# EUROPEAN PATENT APPLICATION

(11) **EP 2 439 607 A1**
(43) Date of publication of application: **11.04.2012**
(21) Application number: 10186826.3
(22) Date of filing: 07.10.2010
(51) Int. Cl.: G06F 1/16, H04M 1/02

(54) **Portable electronic device including touch-sensitive display**

(71) Applicant: Research In Motion Limited, Waterloo, ON N2L 3W8 (CA)
(72) Inventor: Leung, Kwok Ching, Waterloo Ontario N2L 3W8 (CA)
(74) Representative: Fennell, Gareth Charles

(57) **Abstract**

A portable electronic device includes a body and a display assembly coupled to the body and moveable relative to the body in response to receipt of an applied force on a side of the display assembly. The display assembly is biased to a position in which the display assembly overlies the body. The portable electronic device also includes a sensor arranged to detect movement of the display assembly relative to the body, and a processor coupled to the display assembly and the to the sensor to determine an input in response to detecting movement of the display assembly relative to the body.

## Description

### FIELD OF TECHNOLOGY

The present disclosure relates to a portable electronic device that has a touch-sensitive display.

### BACKGROUND

Electronic devices, including portable electronic devices, have gained widespread use and may provide a variety of functions including, for example, telephonic, electronic messaging and other personal information manager (PIM) application functions. Portable electronic devices may include, for example, mobile stations such as simple cellular telephones, smart telephones, and wireless PDAs.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

### SUMMARY

A portable electronic device includes a body and a display assembly coupled to the body and moveable relative to the body in response to receipt of an applied force on a side of the display assembly. The display assembly is biased to a position in which the display assembly overlies the body. The portable electronic device also includes a sensor arranged to detect movement of the display assembly relative to the body, and a processor coupled to the display assembly and to the sensor to determine an input in response to detecting movement of the display assembly relative to the body.

A portable electronic device includes a body, a display assembly coupled to the body and moveable relative to the body in response to an applied force imparted on a side of the display assembly, a sensor arranged to detect the imparted force, and a processor coupled to the display assembly and to the sensor to determine an input in response to detecting the imparted force.

A portable electronic device includes a first housing, a second housing coupled to the first housing and moveable relative thereto, a sensor configured to detect movement of the second housing relative to the first housing, and a processor coupled to the sensor to determine an input corresponding to the movement of the second housing relative to the first housing.

### BRIEF DESCRIPTION OF THE DRAWINGS

Embodiments of the present disclosure will now be described, by way of example only, with reference to the attached Figures, in which:

FIG. 1 is a block diagram of a portable electronic device in accordance with the present disclosure;

FIG. 2 is a perspective view of an example of a portable electronic device in accordance with the disclosure;

FIG. 3 is a top view of the portable electronic device of FIG. 2;

FIG. 4 is a side view of the portable electronic device of FIG. 2;

FIG. 5 is an exploded view of the portable electronic device of FIG. 2; and

FIG. 6 through FIG. 11 illustrate forces imparted to move a display assembly relative to a body of the portable electronic device of FIG. 2.

### DETAILED DESCRIPTION

The following describes a portable electronic device that includes a body and a display assembly coupled to the body and moveable relative to the body in response to receipt of an applied force on a side of the display assembly. The display assembly is biased to a position in which the display assembly overlies the body. The portable electronic device also includes a sensor arranged to detect movement of the display assembly relative to the body, and a processor coupled to the display assembly and to the sensor to determine an input in response to detecting movement of the display assembly relative to the body.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

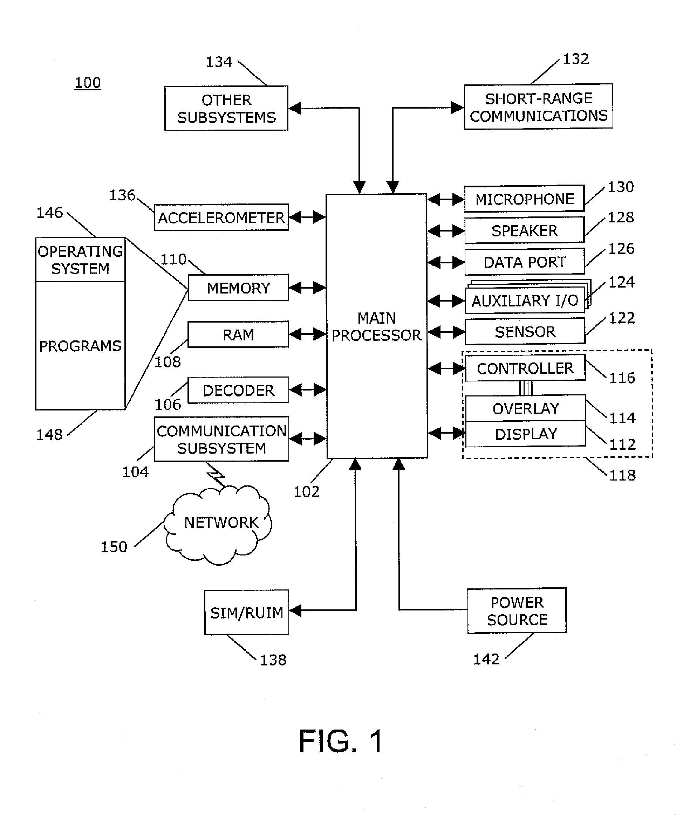

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more sensors 122, an auxiliary input/output (I/O) subsystem 124, a data port 126, a speaker 128, a microphone 130, short-range communications 132, and other device subsystems 134. User- interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable object, such as a finger, thumb or appendage. The controller 116 and the processor 102 may detect a touch by any suitable contact member on the touch-sensitive display 118. Multiple simultaneous touches may be detected.

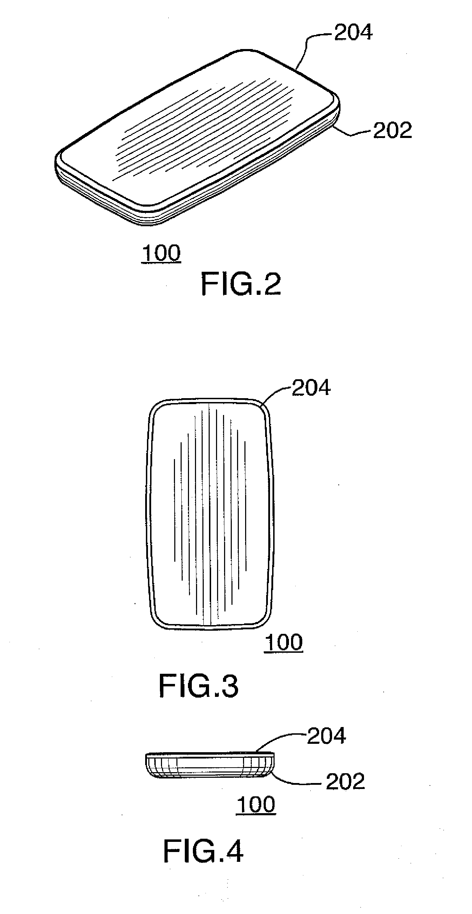

A perspective view, a top view, and side view of one example of the portable electronic device 100 are shown in FIG. 2 through FIG. 4. The portable electronic device 100 includes a body 202 and a display assembly 204 coupled to the body 202. The display assembly 204 is moveable relative to the body 202 in response to receipt of an applied force on a side of the display assembly 204. The display assembly 204 is biased to a position in which the display assembly 204 overlies and is aligned with the body 202. The portable electronic device 100 also includes the sensor 122 arranged to detect movement of the display assembly 204 relative to the body 202, and the processor 102 coupled to the display assembly 204 and to the sensor 122 to determine an input in response to detecting movement of the display assembly 204 relative to the body 202.

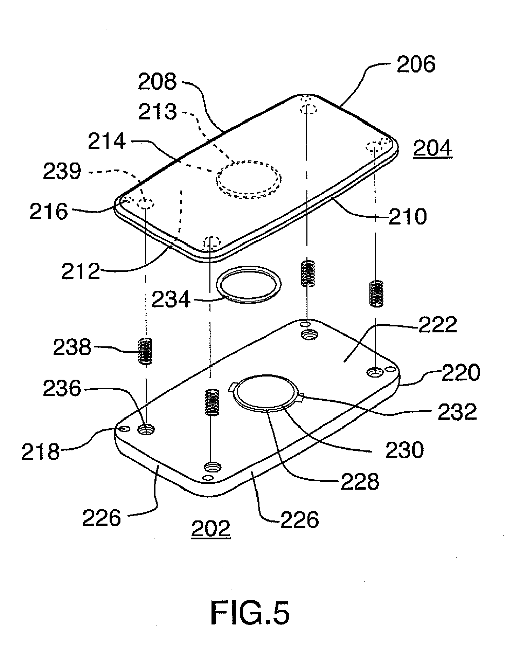

Referring now to FIG. 5, the display assembly 204 includes a display housing 206 that houses the display 112, the overlay 114, and the controller 116. The display 112 and the controller 116 are coupled to the processor 102 by a flexible connection (not shown) that extends from the display assembly 204 to the body 202. The display housing 206 is generally rectangular in shape and includes a frame 208 that frames the touch-sensitive display 118, sidewalls 210, and a back 212. The display housing 206 houses the touch-sensitive display 118 to protect the sides of the touch-sensitive display 118.

The display assembly 204 includes a socket 213 that is generally centered on the back 212. The socket 213 includes a generally cylindrical hole 214 defined through the back 212. The hole 214 extends through the back 212 to an inner cavity (not shown) that is generally cylindrically shaped, has a larger diameter than the hole 214, and is concentric with the hole 214.

The sensor 122, may include, for example, multiple magnetic sensors arranged to detect movement of the display assembly 204 relative to the body 202 and to determine a direction of movement. Alternatively, the sensor 122 may include, for example, force sensors or any other suitable sensors arranged to detect movement and a direction of movement of the display assembly 204 relative to the body 202 or arranged to detect a force imparted on a sidewall 210 of the display assembly 204 and the direction of the imparted force. In the present example, the sensor 122 includes four magnetic sensors that are arranged near the corners of the portable electronic device 100 such that the display assembly 204 includes components 216 of the magnetic sensors and the body 202 includes corresponding components 218. The components 216 of the sensors and the corresponding components 218 may include, for example, magnets and corresponding sensors that cooperate to provide signals to the processor 102 to detect a direction of movement of the display assembly 204 relative to the body 202, as will be described in further detail below.

The body 202 includes an enclosure 220 that houses the remainder of the features of the portable electronic device 100 that are shown in FIG. 1. The enclosure 220 is generally rectangular in shape and includes a front 222, a back (not shown), and sidewalls 226 that extend between the front 222 and the back. The back may include an opening covered by a plate that is releasably attachable to the back for insertion and removal of, for example, the SIM/RUIM card 138.

The front 222 of the enclosure 220 includes a generally cylindrical protrusion 228 that extends outwardly therefrom. A generally cylindrical head 230 is of larger diameter than the protrusion 228, extends from the protrusion, and is concentric with the protrusion. The head 230 includes a pair of tabs 232 that extend diametrically outwardly therefrom. The protrusion 228 extends into the socket 213 to couple the body 202 to the display assembly 204. The diameter of the protrusion 228 is less than the diameter of the hole 214 in the back 212 of the body 202 to facilitate movement of the display assembly 204 relative to the body 202. The head 230 extends into the cavity and the generally cylindrical head 230, including the tabs 232, is sized to provide a clearance fit to facilitate movement of the display assembly 204 relative to the body 202 while inhibiting disconnection of the body 202 from the display assembly 204. The protrusion 228 and the head 230 may be hollow for the passage of the flexible connection from the display assembly 204 into the body 202. The tabs 232 may be integrally formed with the cylindrical head 230 and may be made of any suitable material that is sufficiently flexible to facilitate snap-fitting the end of the cylindrical head 230 and the tabs 232 into the socket 213. The tabs 232 serve to retain the body 202 in connection with the display assembly 204 as the tabs 232 extend a sufficient distance outwardly from the cylindrical head 230 to lock the body 202 in mechanical connection with the display assembly 204. In the example shown in FIG. 5, the tabs 232 are generally rectangular and extend from the cylindrical head 230 at diametrically opposing positions. The location of the tabs 232 at diametrically opposite positions on the cylindrical head facilitates locking of the cylindrical head 230 in the socket 213. Other shapes and other positions on the cylindrical head 230 may be utilized.

An elastically deformable ring 234 of, for example, rubber, extends around an interior wall of the hole 214 in the back 212 of the display assembly 204, and is located between the interior wall of the hole 214 and the protrusion 228. The ring 234 may be inserted into the hole 214 prior to snap-fitting the cylindrical head 230 into the socket 213 during assembly of the portable electronic device 100 such that the ring 234 is disposed between the tabs 232 and the front 222 of the enclosure 220 when assembled. The ring 234 deforms during movement of the display assembly 204 relative to the body 202 and provides a snug fit between the protrusion 228 and the hole to inhibit rattling of the display assembly 204 relative to the body 202.

The front 222 of the enclosure 220 defines four cylindrical recesses 236 with each recess 236 located near a respective corner of the enclosure 220. The recesses 236 are sized to receive biasing elements 238, which may be, for example, springs, therein. One end of the biasing elements 238 is disposed in the recesses 236, and may be connected to the body 202, within the recesses 236, in any suitable manner. The opposing end of the biasing elements 238 may be disposed in complementary recesses 239 in the display assembly 204 and may be connected to the display assembly 204, within the recesses 239, in any suitable manner. The biasing elements 238 serve to bias the display assembly 204 into a rest position in which the display assembly 204 is generally aligned with the body 202. When the display assembly 204 is aligned with the body 202, the display assembly 204 overlies and covers the body 202.

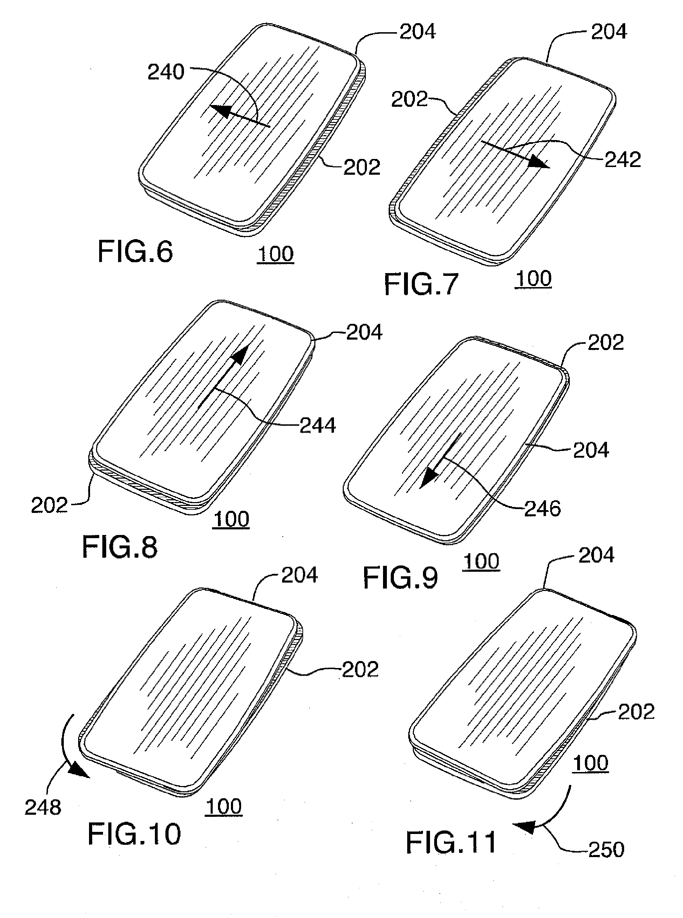

The display assembly 204 may be moved relative to the body 202 when a force is imparted by a user pressing against one or more of the sidewalls 210 of the display assembly 204 while holding the body 202. Signals are received at the processor 102, from the sensors 122, when the display assembly 204 is moved relative to the body 202. The direction of the movement may be determined based on the signals received at the processor 102. For example, movement of the display assembly 204 in a direction that is generally parallel with a sidewall 210 of the display assembly 204 may be detected. FIG. 6 through FIG. 9 illustrate examples of movement of the display assembly 204 relative to the body 202, in the four directions that are generally parallel with sidewalls 210 of the display assembly 204. The movement of the display assembly 204 is illustrated by the arrows, 240, 242, 244, 246. Such movements may be mapped to, for example, backward, forward, play, and stop functions, respectively, in, for example an audio player, a video player, a photo slideshow or other suitable application. Further, a rotational movement of the display assembly 204 may also be determined. FIG. 10 and FIG. 11 illustrate examples of rotational movement of the display assembly 204 relative to the body 202, in two different directions. The movement of the display assembly 204 is illustrated by the arrows 248, 250. Such movements may be mapped to, for example, input to execute an application such as a camera application or a voice recording application.

When movement of the display assembly 204, relative to the body 202, is detected based on signals from the sensors 122, the direction of the movement is determined. The direction of movement that is determined may be the direction in which the greatest movement is detected. An input may be determined utilizing any suitable method of matching directions of movement to respective inputs. For example, an input may be determined utilizing a look-up table to match an input to the determined direction of movement. In the examples shown in FIG. 6 through FIG. 11, 6 different inputs may be determined at the processor 102, each input corresponding to a direction of movement of the display assembly 204 relative to the body 202.

To move the display assembly 204, relative to the body 202, a force may be imparted on a sidewall 210 of the display assembly 204. Thus, a user may press the sidewall 210 of the display assembly 204. A force imparted near a center of the respective sidewall 210 of the display assembly 204, in a direction generally transverse to the sidewall 210, causes generally linear movement of the display assembly 204 in the direction of the imparted force as illustrated in FIG. 6 through FIG. 9. Alternatively, a force imparted near an end of the sidewall 210 of the display assembly 204 causes rotational movement of the display assembly 204 as illustrated in FIG. 10 and FIG. 11.

The coupling of the body and the display assembly is described above for the purpose of providing an example. According to another embodiment (not shown), the body and the display assembly may be coupled together utilizing other suitable couplings. For example, a joystick may be flexibly coupled at one end to the body. The joystick may extend from the body and may be coupled to the display assembly. The joystick may be, for example, centered on the body and the display assembly. Such a joystick may utilize, for example, switches under the joystick to detect application of a force and on the joystick to detect a direction of movement of the display assembly relative to the body when a force is applied to the display assembly.. Other suitable couplings of the display assembly and the body may be utilized.

One example of a portable electronic device 100 in accordance with the present disclosure, is shown and described above. Other portable electronic devices and other shapes of portable electronic devices may be utilized.

The movement of the display assembly 204 relative to the body 202 provides for input that is determined based on the direction of the movement. The movement of the display assembly 204 by a force imparted on a sidewall 210 of the display assembly 204 may be utilized to replace or reduce the number of physical keys or buttons on a side of the portable electronic device 100 or to increase the number of functions that may be performed, thereby improving user experience. Functions that may be executed by input from physical keys on a sidewall 210 or sidewalls 210 of the portable electronic device, may be executed by pressing on the sidewall 210 of the display assembly 204, in a similar manner to pressing on the button or key on the sidewall. Thus, similar functions may be performed by imparting force in similar locations on the device. For example, a user may impart a force on a side of the display to, for example, increase volume output by the speaker 128 of the portable electronic device 100. Additional functions may also be performed by mapping to respective movements.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A portable electronic device comprising:
a body;
a display assembly coupled to the body and moveable relative to the body in response to receipt of an applied force on a side of the display assembly, the display assembly biased to a rest position in which the display assembly overlies the body;
a sensor arranged to detect movement of the display assembly relative to the body; and
a processor coupled to the display assembly and to the sensor to determine an input in response to detecting movement of the display assembly relative to the body.

2. The portable electronic device according to claim 1, wherein the display assembly comprises a touch-sensitive display.

3. The portable electronic device according to claim 1, wherein one of the display assembly and the body includes a socket and the other of the display assembly and the body includes a protrusion that is received in the socket to couple the body to the display assembly.

4. The portable electronic device according to claim 3, wherein the socket and the protrusion are sized to provide a clearance fit to facilitate movement of the display assembly relative to the body.

5. The portable electronic device according to claim 3, wherein the protrusion includes a head sized to retain the protrusion within the socket.

6. The portable electronic device according to claim 3, wherein the protrusion is generally cylindrical.

7. The portable electronic device according to claim 3, comprising an elastically deformable element disposed between the protrusion and the socket.

8. The portable electronic device according to claim 7, wherein the elastically deformable element comprises a rubber ring.

9. The portable electronic device according to claim 1, wherein the display assembly is biased into alignment with the body.

10. The portable electronic device according to claim 1, comprising a plurality of biasing members connected between the body and the display assembly.

11. The portable electronic device according to claim 1, comprising a respective biasing member near each of four corners of the display assembly and connected between the body and the display assembly.

12. The portable electronic device according to claim 1, wherein the sensor comprises a plurality of force sensors between the body and the display assembly.

13. The portable electronic device according to claim 1, wherein the sensor comprises a plurality of magnetic sensors in at least one of the body and the display assembly.

14. The portable electronic device according to claim 1, wherein the display assembly is rotatable relative to the body.

15. The portable electronic device according to claim 1, wherein the sensor is arranged to detect a direction of movement of the display assembly relative to the body.

## Amended claims

### Amended claims in accordance with Rule 137(2) EPC.

**1.** A portable electronic device (100) comprising:
a body (202);
a display assembly (204) coupled to the body (202) and moveable relative to the body (202) in response to receipt of an applied force on a side of the display assembly (204), the display assembly (204) biased to a rest position in which the display assembly (204) overlies the body (202);
a sensor (122) arranged to detect movement of the display assembly (204) relative to the body (202); and
a processor (102) coupled to the display assembly (204) and to the sensor (122) to determine an input in response to detecting movement of the display assembly (204) relative to the body (202).

**2.** The portable electronic device (100) according to claim 1, wherein the display assembly (204) comprises a touch-sensitive display (118).

**3.** The portable electronic device (100) according to claim 1, wherein one of the display assembly (204) and the body (202) includes a socket (213) and the other of the display assembly (204) and the body (202) includes a protrusion (228) that is received in the socket (213) to couple the body (202) to the display assembly (204).

**4.** The portable electronic device (100) according to claim 3, wherein the socket (213) and the protrusion (228) are sized to provide a clearance fit to facilitate movement of the display assembly (204) relative to the body (202).

**5.** The portable electronic device (100) according to claim 3, wherein the protrusion (228) includes a head (230) sized to retain the protrusion (228) within the socket (213).

**6.** The portable electronic device (100) according to claim 3, wherein the protrusion (228) is generally cylindrical.

**7.** The portable electronic device (100) according to claim 3, comprising an elastically deformable element (234) disposed between the protrusion (228) and the socket (213).

**8.** The portable electronic device (100) according to claim 7, wherein the elastically deformable element (234) comprises a rubber ring.

**9.** The portable electronic device (100) according to claim 1, wherein the display assembly (204) is biased into alignment with the body (202).

**10.** The portable electronic device (100) according to claim 1, comprising a plurality of biasing members (238) connected between the body (202) and the display assembly (204).

**11.** The portable electronic device (100) according to claim 1, comprising a respective biasing member (238) near each of four corners of the display assembly (204) and connected between the body (202) and the display assembly (204).

**12.** The portable electronic device (100) according to claim 1, wherein the sensor (122) comprises a plurality of force sensors between the body (202) and the display assembly (204).

**13.** The portable electronic device (100) according to claim 1, wherein the sensor (122) comprises a plurality of magnetic sensors in at least one of the body (202) and the display assembly (204).

**14.** The portable electronic device (100) according to claim 1, wherein the display assembly (204) is rotatable relative to the body (202).

**15.** The portable electronic device (100) according to claim 1, wherein the sensor (122) is arranged to detect a direction of movement of the display assembly (204) relative to the body (202).
